(19) Europäisches Patentamt
European Patent Office
Office européen des brevets

(11) **EP 4 527 810 A1**

(12) **EUROPEAN PATENT APPLICATION**

(43) Date of publication:
26.03.2025 Bulletin 2025/13

(51) International Patent Classification (IPC):
*C03C 3/118* (2006.01)

(21) Application number: 24202270.5

(22) Date of filing: **24.09.2024**

(52) Cooperative Patent Classification (CPC):
C03C 3/118

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.09.2023 CN 202311239649**

(71) Applicant: CDGM Glass Co. Ltd.
Chengdu, Sichuan 610100 (CN)

(72) Inventors:
• MAO, Lulu
Chengdu, 610100 (CN)
• KUANG, Bo
Chengdu, 610100 (CN)
• HAO, Liangzhen
Chengdu, 610100 (CN)

(74) Representative: **Meissner Bolte Partnerschaft mbB**
**Patentanwälte Rechtsanwälte**
**Postfach 86 06 24**
**81633 München (DE)**

(54) **OPTICAL GLASS, OPTICAL ELEMENT AND OPTICAL INSTRUMENT**

(57) The present invention provides an optical glass. The optical glass includes the following components in percentage by weight: 50-70% of $SiO_2$; 2-18% of $B_2O_3$; 10-30% of $K_2O$; and greater than 3% but less than or equal to 20% of F, where $SiO_2/(K_2O+F)$ is 1.2-4.5. Through a reasonable component design, the optical glass of the present invention also has a lower transition temperature and a lower density while having a desired refractive index and an desired Abbe number.

EP 4 527 810 A1

## Description

### FIELD OF TECHNOLOGY

The present invention relates to an optical glass, and in particular to an optical glass with a refractive index of 1.45-1.51 and an Abbe number of 66-74, as well as an optical element and an optical instrument made thereof.

### BACKGROUND

In recent years, with the development of fields such as optoelectronic information and digital display, there has been a demand for miniaturization, lightweight, and high performances of optical elements used in optical systems. At present, the mainstream manufacturing method of optical elements is precision compression molding, including direct compression molding and secondary compression molding, which can reduce the consumption of raw materials, reduce the cost of manpower and material resources, and reduce environmental pollution. This technology can mass-produce aspherical elements at low costs. The so-called precision compression molding refers to mold a glass preform with a high-precision mold having a predetermined product shape at certain temperature and pressure, so as to obtain a glass product having a final product shape and optical function. Various optical elements such as spherical lenses, aspherical lenses, prisms, and diffraction gratings can be manufactured through precision compression molding technology.

In precision compression molding, in order to copy a high-precision mold surface on the finished glass product, it is necessary to press-mold the glass preform at a high temperature (usually at a glass transition temperature above 20-60°C). At this time, the molding mold is at high temperature and under pressure, and the mold surface is easily oxidized and eroded even if it is in a protective gas. In order to prolong the life of the mold and suppress damage to the mold in a high temperature environment, it is necessary to reduce the compression molding temperature, and thus, the transition temperature of the optical glass used for compression molding needs to be as low as possible. Chinese patent CN101300202A discloses an optical glass with a refractive index of 1.45-1.65 and an Abbe number more than 65, and its transition temperature needs to be further reduced. Chinese patent CN108529874A discloses an optical glass with a refractive index of 1.42-1.53 and an Abbe number of 55-98. Although its transition temperature is low, its density is relatively high, which is not conducive to the requirement of lightweight.

### SUMMARY

The technical problem to be solved by the present invention is to provide an optical glass with a refractive index of 1.45-1.51 and an Abbe number of 66-74.

The technical solution adopted by the present invention to solve the technical problem is as follows:

(1) An optical glass, including the following components in percentage by weight: 50-70% of $SiO_2$; 2-18% of $B_2O_3$; 10-30% of $K_2O$; and greater than 3% but less than or equal to 20% of F, where $SiO_2/(K_2O+F)$ is 1.2-4.5.

(2) The optical glass according to (1), further including the following components in percentage by weight: 0-5% of $Al_2O_3$; and/or 0-2% of $Nb_2O_5$; and/or 0-2% of $TiO_2$; and/or 0-3% of $ZrO_2$; and/or 0-7% of $Na_2O$; and/or 0-5% of $Li_2O$; and/or 0-5% of $Ln_2O_3$; and/or 0-2% of $WO_3$; and/or 0-3% of $Ta_2O_5$; and/or 0-2% of $Bi_2O_3$; and/or 0-8% of RO; and/or 0-5% of ZnO; and/or 0-3% of $P_2O_5$; and/or 0-1% of a clarifying agent, where the $Ln_2O_3$ is one or more of $La_2O_3$, $Gd_2O_3$, $Y_2O_3$, and $Yb_2O_3$, the RO is one or more of BaO, SrO, CaO, and MgO, and the clarifying agent is one or more of $Sb_2O_3$, $SnO_2$ and $CeO_2$.

(3) An optical glass, including the following components in percentage by weight: $SiO_2$, $B_2O_3$, $K_2O$, and F, where $SiO_2/(K_2O+F)$ is 1.2-4.5, and the optical glass has a refractive index $n_d$ of 1.45-1.51, an Abbe number $v_d$ of 66-74, a transition temperature $T_g$ less than 490°C, and a density $\rho$ less than 2.70 g/cm$^3$.

(4) The optical glass according to (3), including the following components in percentage by weight: 50-70% of $SiO_2$; and/or 2-18% of $B_2O_3$; and/or 10-30% of $K_2O$; and/or 0-2% of $Nb_2O_5$; and/or 0-2% of $TiO_2$; and/or 0-3% of $ZrO_2$; and/or greater than 3% but less than or equal to 20% of F; and/or 0-5% of $Al_2O_3$; and/or 0-7% of $Na_2O$; and/or 0-5% of $Li_2O$; and/or 0-5% of $Ln_2O_3$; and/or 0-2% of $WO_3$; and/or 0-3% of $Ta_2O_5$; and/or 0-2% of $Bi_2O_3$; and/or 0-8% of RO; and/or 0-5% of ZnO; and/or 0-3% of $P_2O_5$; and/or 0-1% of a clarifying agent, where the $Ln_2O_3$ is one or more of $La_2O_3$, $Gd_2O_3$, $Y_2O_3$, and $Yb_2O_3$, the RO is one or more of BaO, SrO, CaO, and MgO, and the clarifying agent is one or more of $Sb_2O_3$, $SnO_2$ and $CeO_2$.

(5) The optical glass according to any one of (1) to (4), where the components of the optical glass in percentage by weight meet one or more of the following 5 conditions:

1) $F/B_2O_3$ is 0.2-5.0, preferably $F/B_2O_3$ is 0.3-2.0, more preferably $F/B_2O_3$ is 0.4-1.5, and further preferably $F/B_2O_3$ is 0.5-0.9;

2) $Al_2O_3$/F is less than 1.0, preferably $Al_2O_3$/F is less than 0.8, more preferably $Al_2O_3$/F is 0.01-0.5, and further preferably $Al_2O_3$/F is 0.07-0.3;

3) $K_2O$/F is 0.7-7.0, preferably $K_2O$/F is 1.0-5.0, more preferably $K_2O$/F is 1.5-3.0, and further preferably $K_2O$/F is 1.8-2.8;

4) $SiO_2$/($K_2O$+F) is 1.3-3.5, preferably $SiO_2$/($K_2O$+F) is 1.5-3.0, and more preferably $SiO_2$/($K_2O$+F) is 1.7-2.5; and

5) ($ZrO_2$+$Nb_2O_5$+$TiO_2$)/F is 0.01-1.0, preferably ($ZrO_2$+$Nb_2O_5$+$TiO_2$)/F is 0.01-0.8, more preferably ($ZrO_2$+$Nb_2O_5$+$TiO_2$)/F is 0.02-0.6, and further preferably ($ZrO_2$+$Nb_2O_5$+$TiO_2$)/F is 0.03-0.4.

(6) The optical glass according to any one of (1) to (4), where the components of the optical glass are shown in percentage by weight, where ($Nb_2O_5$+$TiO_2$+$Bi_2O_3$+$Ta_2O_5$+$WO_3$)/$B_2O_3$ is greater than 0 but less than or equal to 0.8, preferably ($Nb_2O_5$+$TiO_2$+$Bi_2O_3$+$Ta_2O_5$+$WO_3$)/$B_2O_3$ is 0.01-0.5, more preferably ($Nb_2O_5$+$TiO_2$+$Bi_2O_3$+$Ta_2O_5$+$WO_3$)/$B_2O_3$ is 0.01-0.3, and further preferably ($Nb_2O_5$+$TiO_2$+$Bi_2O_3$+$Ta_2O_5$+$WO_3$)/$B_2O_3$ is 0.02-0.2; and/or ($Nb_2O_5$+$TiO_2$)/$Al_2O_3$ is less than 2.0, preferably ($Nb_2O_5$+$TiO_2$)/$Al_2O_3$ is 0.01-1.5, more preferably ($Nb_2O_5$+$TiO_2$)/$Al_2O_3$ is 0.05-1.0, and further preferably ($Nb_2O_5$+$TiO_2$)/$Al_2O_3$ is 0.1-0.5; and/or ($Li_2O$+$Na_2O$+$K_2O$)/$B_2O_3$ is 0.7-6.0, preferably ($Li_2O$+$Na_2O$+$K_2O$)/$B_2O_3$ is 0.8-5.0, more preferably ($Li_2O$+$Na_2O$+$K_2O$)/$B_2O_3$ is 1.0-3.0, and further preferably ($Li_2O$+$Na_2O$+$K_2O$)/$B_2O_3$ is 1.5-2.0; and/or ($Li_2O$+$Na_2O$+$K_2O$)/$SiO_2$ is 0.15-0.8, preferably ($Li_2O$+$Na_2O$+$K_2O$)/$SiO_2$ is 0.18-0.7, more preferably ($Li_2O$+$Na_2O$+$K_2O$)/$SiO_2$ is 0.2-0.6, and further preferably ($Li_2O$+$Na_2O$+$K_2O$)/$SiO_2$ is 0.2-0.45.

(7) The optical glass according to any one of (1) to (4), where the components of the optical glass are shown in percentage by weight, where $SiO_2$ is 52-68%, and preferably $SiO_2$ is 54-64%; and/or $B_2O_3$ is 4-16%, and preferably $B_2O_3$ is 8-14%; and/or $K_2O$ is 12-27%, and preferably $K_2O$ is 13-25%; and/or $Nb_2O_5$ is 0-1%, and preferably $Nb_2O_5$ is 0-0.8%; and/or $TiO_2$ is 0-1%, and preferably $TiO_2$ is 0-0.8%; and/or $ZrO_2$ is 0-2%, and preferably $ZrO_2$ is 0-1%; and/or F is 5-16%, and preferably F is 6-12%; and/or $Al_2O_3$ is 0.1-3%, and preferably $Al_2O_3$ is 0.2-2%; and/or $Na_2O$ is 0-5%, and preferably $Na_2O$ is 0-3%; and/or $Li_2O$ is 0-4%, and preferably $Li_2O$ is 0-3%; and/or the $Ln_2O_3$ is 0-3%, and preferably the $Ln_2O_3$ is 0-1%; and/or $WO_3$ is 0-1%, and preferably $WO_3$ is 0-0.5%; and/or $Ta_2O_5$ is 0-2%, and preferably $Ta_2O_5$ is 0-1%; and/or $Bi_2O_3$ is 0-1%, and preferably $Bi_2O_3$ is 0-0.5%; and/or the RO is 0-5%, and preferably the RO is 0-2%; and/or ZnO is 0-2%, and preferably ZnO is less than 1%; and/or $P_2O_5$ is 0-2%, and preferably $P_2O_5$ is 0-1%; and/or the clarifying agent is 0-0.5%, and preferably the clarifying agent is 0-0.2%, where the $Ln_2O_3$ is one or more of $La_2O_3$, $Gd_2O_3$, $Y_2O_3$, and $Yb_2O_3$, the RO is one or more of BaO, SrO, CaO, and MgO, and the clarifying agent is one or more of $Sb_2O_3$, $SnO_2$ and $CeO_2$.

(8) The optical glass according to any one of (1) to (4), where the components of the optical glass do not include $Na_2O$; and/or the components do not include $Li_2O$; and/or the components do not include $La_2O_3$; and/or the components do not include $Gd_2O_3$; and/or the components do not include $Y_2O_3$; and/or the components do not include $Yb_2O_3$; and/or the components do not include ZnO; and/or the components do not include $P_2O_5$; and/or the components do not include BaO; and/or the components do not include SrO; and/or the components do not include CaO; and/or the components do not include MgO.

(9) The optical glass according to any one of (1) to (4), where the optical glass has the refractive index $n_d$ of 1.45-1.51, preferably 1.46-1.50, and more preferably 1.47-1.49, and the Abbe number $v_d$ of 66-74, preferably 68-72, and more preferably 69-71.

(10) The optical glass according to any one of (1) to (4), where the optical glass has transmittance at 365 nm $\tau_{365nm}$ more than 98.0%, preferably more than 99.0%, and more preferably more than 99.5%; and/or the optical glass has a transmittance at 365 nm resistance to ultraviolet radiation attenuation performance $\Delta\tau_{365nm}$ less than 1.0%, preferably less than 0.9%, and more preferably less than 0.8%; and/or the optical glass has a transmittance at 405 nm resistance to ultraviolet radiation attenuation performance $\Delta\tau_{405nm}$ less than 0.5%, preferably less than 0.3%, and more preferably less than 0.2%; and/or the optical glass has a bubble degree above grade A, preferably above grade $A_0$, and more preferably above grade $A_{00}$; and/or the optical glass has a stripe degree above grade C, and preferably above grade B; and/or the optical glass has weather resistance CR above class 2, and preferably of class 1; and/or the optical glass has the transition temperature $T_g$ less than 490°C, preferably less than 480°C, and more preferably less than 475°C; and/or the optical glass has abrasiveness $F_A$ of 60-90, preferably 65-85, and more preferably 70-80; and/or the optical glass has the density $\rho$ less than 2.70 g/cm$^3$, preferably less than 2.60 g/cm$^3$, and more preferably less than 2.50 g/cm$^3$; and/or the optical glass has refractive index batch stability of -15×10$^{-5}$-+15×10$^{-5}$, preferably -10×10$^{-5}$-+10×10$^{-5}$, more preferably -5×10$^{-5}$-+5×10$^{-5}$, and further preferably -2×10$^{-5}$-+2×10$^{-5}$.

(11) A glass preform, made of the optical glass according to any one of (1) to (10).

(12) An optical element, made of the optical glass according to any one of (1) to (10), or made of the glass preform according to (11).

(13) An optical instrument, including the optical glass according to any one of (1) to (10), and/or including the optical element according to (12).

The beneficial effects of the present invention are as follows: through a reasonable component design, the optical glass of the present invention also has a lower transition temperature and a lower density while having a desired refractive index and an desired Abbe number.

## DESCRIPTION OF THE EMBODIMENTS

Embodiments of the optical glass of the present invention will be described in detail below, but the present invention is not limited to the following embodiments and can be implemented with appropriate modifications within the scope of the purpose of the present invention. In addition, although there may be appropriate omissions in the repeated description, it does not limit the main idea of the present invention. In the following content, the optical glass of the present invention is sometimes referred to as the glass.

Radiation-resistant optical glass with a refractive index of 1.45-1.51 and an Abbe number of 66-74 is a key material for exposure lenses in lithography equipment, and its accuracy determines the accuracy level of lithography equipment lenses. Optical elements made of ordinary optical glass will experience a significant decrease in the transmittance and a change in the refractive index under long-term irradiation in an ultraviolet band (355-430 nm), which is fatal to all kinds of lithography equipment working in the ultraviolet band. With the development of chip manufacturing technology and advanced packaging technology towards lower line width and higher efficiency, lithography equipment working in this band needs to have higher resolution, higher luminous flux and larger exposure areas. Correspondingly, optical materials working on such lithography equipment are required to have larger apertures, and better radiation resistance, transmittance and optical uniformity. The main problem with such optical materials in the prior art is its poor resistance to ultraviolet radiation. Under the verification conditions of lithography equipment, the transmittance attenuation can reach 5%. At the same time, the transmittance at 365 nm of such materials is relatively low, making it difficult to meet the requirements of high-precision lithography equipment. In some embodiments, the optical glass of the present invention has transmittance at 365 nm ($\tau_{365nm}$) more than 98.0%, preferably more than 99.0%, and more preferably more than 99.5%, a transmittance at 365 nm resistance to ultraviolet radiation attenuation performance ($\Delta\tau_{365nm}$) less than 1.0%, preferably less than 0.9%, and more preferably less than 0.8%, and a transmittance at 405 nm resistance to ultraviolet radiation attenuation performance ($\Delta\tau_{405nm}$) less than 0.5%, preferably less than 0.3%, and more preferably less than 0.2%. The optical glass of the present invention can also be used in fields such as chip manufacturing and advanced packaging.

[Optical glass]

The range of each component of the optical glass of the present invention will be described below. In the present invention, unless otherwise specified, the content and the total content of each component are shown in percentage by weight (wt%). In the present invention, except for the F (fluorine) component, other components are shown as oxides, and the sum of the percentage by weight of all oxide components in the glass and the percentage by weight of the F component in the glass is 100%.

Unless otherwise specified in specific circumstances, the numerical range listed in the present invention includes upper and lower limit values, and "more than" and "less than" include endpoint values, as well as all integers and fractions included in the range, without being limited to the specific values listed when the range is defined. The term "and/or" referred to herein is inclusive. For example, "A and/or B" refers to only A, or only B, or both A and B.

<Essential component and optional component>

$SiO_2$ is the main network forming component of the glass in the present invention. If the content of $SiO_2$ is less than 50%, the transmittance at 365 nm of the glass is low, which is fatal to ultraviolet optical systems with long optical paths and high illumination requirements, such as lithography machine lenses and exposure machine prisms. Therefore, the lower limit of the content of SiO2 is 50%, preferably 52%, and more preferably 54%. If the content of SiO2 is higher than 70%, the refractive index of the glass is difficult to meet the design requirements. At the same time, the glass needs to be melted at a higher temperature. The higher melting temperature will cause the erosion of the crucible by the molten glass to increase exponentially. The content of ions such as iron (Fe) ions and platinum (Pt) ions that have strong absorption effects on the ultraviolet band rapidly increase, leading to a rapid decrease in the ultraviolet transmittance instead, especially at 365 nm. In addition, the excessive content of $SiO_2$ can also lead to high-temperature viscosity of the glass, making it difficult to meet design requirements for optical uniformity, a bubble degree, and a stripe degree. Therefore, the upper limit of the content of $SiO_2$ is 70%, preferably 68%, and more preferably 64%.

An appropriate amount of $B_2O_3$ can increase the refractive index of the glass, reinforce the structure of the glass, and improve the meltability and ultraviolet radiation resistance performance of the glass. If the content of $B_2O_3$ is higher than 18%, the erosion of the crucible by the glass liquid increases rapidly, resulting in a rapid decrease in the transmittance of ultraviolet light. If the content of $B_2O_3$ is lower than 2%, glass melting becomes difficult. Therefore, the content of $B_2O_3$ is 2-18%, preferably 4-16%, and more preferably 8-14%.

$Al_2O_3$ can enhance the compactness of the internal structure of the glass, and improve the ultraviolet transmittance and chemical stability of the glass, but if its content exceeds 5%, stones are easily produced inside the glass, and the internal quality of the glass becomes worse. Therefore, the content of $Al_2O_3$ is 0-5%, preferably 0.1-3%, and more preferably 0.2-2%.

$ZrO_2$ can increase the devitrification resistance of the glass, improve the chemical stability and mechanical properties of glass, reduce the erosion of crucible materials during melting, and enhance the ultraviolet transmittance of glass. If its content is too high, the difficulty of melting the glass increases, the melting temperature rises, and it leads to inclusions inside the glass and a decrease in the light transmittance. Therefore, the content of $ZrO_2$ in the present invention is 0-3%, preferably 0-2%, and more preferably 0-1%.

$K_2O$ has the ability to improve the thermal stability and meltability of the glass, reduce the transition temperature. At the same time, it can reduce the high-temperature viscosity of the glass and provide free oxygen to reinforce the network structure of the glass, thereby enhancing the ultraviolet transmittance of the glass. However, if its content is too high, the devitrification resistance and chemical stability of the glass will decrease. Therefore, the content of $K_2O$ in the present invention is 10-30%, preferably 12-27%, and more preferably 13-25%.

$Na_2O$ can improve the meltability of the glass and reduce the liquid phase temperature of the glass, but when its content is too high, it will accelerate the deterioration of the crystallization resistance of the glass. At the same time, it will prolong the time for the glass to change from liquid to solid during cooling and molding, creating conditions for crystallization. Therefore, the content of $Na_2O$ in the present invention is 0-7%, preferably 0-5%, and more preferably 0-3%. In some embodiments, it is further preferred not to contain $Na_2O$.

$Li_2O$ can effectively lower the transition temperature of the glass, but optical glass is usually melted using platinum or platinum alloy vessels. During high-temperature melting, Li in the glass components easily corrodes platinum or platinum alloy vessels, resulting in the generation of more platinum-containing foreign matter in the finished glass, leading to a decrease in the ultraviolet transmittance of the glass. Therefore, the content of $Li_2O$ in the present invention is 0-5%, preferably 0-4%, and more preferably 0-3%. In some embodiments, it is further preferred not to contain $Li_2O$.

In some embodiments, controlling the ratio $(Li_2O+Na_2O+K_2O)/B_2O_3$ between the total content $Li_2O+Na_2O+K_2O$ of $Li_2O$, $Na_2O$ and $K_2O$ and the content of $B_2O_3$ in the range of 0.7-6.0 can improve the ultraviolet transmittance and refractive index batch stability of the glass. For lithography equipment, refractive index batch stability is very important. Therefore, preferably $(Li_2O+Na_2O+K_2O)/B_2O_3$ is 0.7-6.0, more preferably $(Li_2O+Na_2O+K_2O)/B_2O_3$ is 0.8-5.0, further preferably $(Li_2O+Na_2O+K_2O)/B_2O_3$ is 1.0-3.0, and further more preferably $(Li_2O+Na_2O+K_2O)/B_2O_3$ is 1.5-2.0.

In some embodiments, controlling the ratio $(Li_2O+Na_2O+K_2O)/SiO_2$ between the total content $Li_2O+Na_2O+K_2O$ of $Li_2O$, $Na_2O$ and $K_2O$ and the content of $SiO_2$ in the range of 0.15-0.8 can suppress the volatilization of F in the glass, improve the refractive index batch stability of the glass, and reduce the transition temperature of the glass. Therefore, preferably $(Li_2O+Na_2O+K_2O)/SiO_2$ is 0.15-0.8, and more preferably $(Li_2O+Na_2O+K_2O)/SiO_2$ is 0.18-0.7. Furthermore, controlling $(Li_2O+Na_2O+K_2O)/SiO_2$ in the range of 0.2-0.6 can further optimize the abrasiveness, high-temperature viscosity, and weather resistance of the glass to an appropriate range. Therefore, further preferably $(Li_2O+Na_2O+K_2O)/SiO_2$ is 0.2-0.6, and further more preferably $(Li_2O+Na_2O+K_2O)/SiO_2$ is 0.2-0.45.

$Ln_2O_3$ ($Ln_2O_3$ is one or more of $La_2O_3$, $Gd_2O_3$, $Y_2O_3$, and $Yb_2O_3$) is a component that can improve the refractive index and chemical stability of the glass. By controlling the content of $Ln_2O_3$ to less than 5%, it can prevent the devitrification resistance of the glass from decreasing, and prevent the refractive index and Abbe number of the glass from exceeding the design requirements. Therefore, the content of $Ln_2O_3$ is 0-5%, preferably 0-3%, and more preferably 0-1%. In some embodiments, it is further preferred not to contain $La_2O_3$, and/or not to contain $Gd_2O_3$, and/or not to contain $Y_2O_3$, and/or not to contain $Yb_2O_3$.

$Nb_2O_5$, $TiO_2$, $Bi_2O_3$, $Ta_2O_5$, and $WO_3$ belong to high-refraction and high-dispersion oxides, which can enhance the ultraviolet radiation resistance of the glass, and at the same time, can also enhance the refractive index and dispersion of the glass. However, when the content of the above-described oxides is high, the ultraviolet transmittance of the glass will be reduced. Therefore, the content of $Nb_2O_5$ in the present invention is 0-2%, preferably 0-1%, and more preferably 0-0.8%. The content of $TiO_2$ is 0-2%, preferably 0-1%, and more preferably 0-0.8%. The content of $Bi_2O_3$ is 0-2%, preferably 0-1%, and more preferably 0-0.5%. The content of $WO_3$ is 0-2%, preferably 0-1%, and more preferably 0-0.5%. The content of $Ta_2O_5$ is limited to 0-3%, preferably 0-2%, and more preferably 0-1%.

In some embodiments, controlling the ratio $(Nb_2O_5+TiO_2+Bi_2O_3+Ta_2O_5+WO_3)/B_2O_3$ of the total content $Nb_2O_5+TiO_2+Bi_2O_3+Ta_2O_5+WO_3$ of $Nb_2O_5$, $TiO_2$, $Bi_2O_3$, $Ta_2O_5$, and $WO_3$ to the content of $B_2O_3$ in the range of greater than 0 but less than or equal to 0.8 can improve the ultraviolet radiation resistance performance of the glass, while preventing a decrease in the ultraviolet transmittance of the glass, and optimizing the bubble degree and refractive index batch stability of the glass. Therefore, preferably $(Nb_2O_5+TiO_2+Bi_2O_3+Ta_2O_5+WO_3)/B_2O_3$ is greater than 0 but less than or equal to 0.8, more preferably $(Nb_2O_5+TiO_2+Bi_2O_3+Ta_2O_5+WO_3)/B_2O_3$ is 0.01-0.5, further preferably $(Nb_2O_5+TiO_2+Bi_2O_3+Ta_2O_5+WO_3)/B_2O_3$ is 0.01-0.3, and further more preferably $(Nb_2O_5+TiO_2+Bi_2O_3+Ta_2O_5+WO_3)/B_2O_3$ is 0.02-0.2.

In some embodiments, controlling the ratio $(Nb_2O_5+TiO_2)/Al_2O_3$ between the total content $Nb_2O_5+TiO_2$ of $Nb_2O_5$ and $TiO_2$ and the content of $Al_2O_3$ to less than 2.0 can improve the ultraviolet radiation resistance performance of the glass, while preventing an increase in the density of the glass. Therefore, preferably $(Nb_2O_5+TiO_2)/Al_2O_3$ is less than 2.0, and more preferably $(Nb_2O_5+TiO_2)/Al_2O_3$ is 0.01-1.5. Furthermore, controlling $(Nb_2O_5+TiO_2)/Al_2O_3$ in the range of 0.05-1.0 can further optimize the abrasiveness and stripe degree of the glass. Therefore, further preferably $(Nb_2O_5+TiO_2)/Al_2O_3$ is 0.05-1.0, and further more preferably $(Nb_2O_5+TiO_2)/Al_2O_3$ is 0.1-0.5.

Alkaline earth metal oxide RO (RO is one or more of BaO, SrO, CaO, and MgO) can adjust the optical constants and high-temperature viscosity of the glass, but its high content can lead to a decrease in the ultraviolet transmittance and chemical stability of the glass. Therefore, the content of RO is 0-8%, preferably 0-5%, and more preferably 0-2%. In some embodiments, it is further preferred not to contain BaO, and/or not to contain SrO, and/or not to contain CaO, and/or not to contain MgO.

ZnO can strengthen the network structure of the glass, and improve the refractive index and ultraviolet transmittance of the glass. If the content of ZnO is too high, the phase separation trend of the glass increases, the ultraviolet transmittance decreases instead, and at the same time, the stripe degree becomes worse. Therefore, the content of ZnO is 0-5%, preferably 0-2%, and more preferably less than 1%. In some embodiments, it is further preferred not to contain ZnO.

$P_2O_5$ can lower the melting temperature of glass raw materials and improve the ultraviolet transmittance of the glass, but when its content is high, the crystallization resistance and chemical stability of the glass become worse. Therefore, the content of $P_2O_5$ is 0-3%, preferably 0-2%, and more preferably 0-1%. In some embodiments, it is further preferred not to contain $P_2O_5$.

In the present invention, by containing 0-1% of one or more components of $Sb_2O_3$, $SnO_2$ and $CeO_2$ as the clarifying agent, the clarifying effect of the glass can be improved, and the bubble degree of the glass can be improved. The content of the clarifying agent is preferably 0-0.5%, and more preferably the content of the clarifying agent is 0-0.2%. Due to the reasonable design of the component types and contents of the optical glass of the present invention, and its excellent bubble degree, it is further preferred in some embodiments to not contain the clarifying agent. When the content of $Sb_2O_3$ exceeds 1%, the glass has a tendency to reduce the clarifying performance. At the same time, due to its strong oxidation effect promotes the corrosion of platinum or platinum alloy vessels used for melting glass and the deterioration of molding molds, the content of $Sb_2O_3$ in the present invention is preferably 0-1%, more preferably 0-0.5%, and further preferably 0-0.2%, and further more preferably no $Sb_2O_3$ is contained. $SnO_2$ can also be used as the clarifying agent, but when its content exceeds 1%, the tendency to glass coloring increases, or when the glass is heated, softened and re-molded, such as press-molded, Sn becomes a starting point for nucleation and tends to devitrification. Therefore, the content of $SnO_2$ in the present invention is preferably 0-1%, more preferably 0-0.5%, and further preferably 0-0.2%, and further more preferably no $SnO_2$ is contained. The function and content ratio of $CeO_2$ are consistent with those of $SnO_2$, and its content is preferably 0-1%, more preferably 0-0.5%, and further preferably 0-0.2%, and further more preferably no $CeO_2$ is contained.

F (fluorine) can lower the transition temperature of the glass, and improve the ultraviolet transmittance and ultraviolet radiation resistance performance of the glass. If the content of F is too high, the glass will volatilize greatly during the smelting process, which will bring fluctuations in the refractive index and intrinsic quality (stripe degree, bubble degree) of the glass. At the same time, the optical uniformity of the glass is difficult to meet the design requirements, and it also poses a threat to the production environment and the health of operators. Therefore, the content of F is greater than 3% but less than or equal to 20%, preferably 5-16%, and more preferably 6-12%.

In some embodiments, controlling the ratio $F/B_2O_3$ between the content of F and the content of $B_2O_3$ in the range of 0.2-5.0 can improve the ultraviolet transmittance of the glass and prevent a decrease in the ultraviolet radiation resistance performance. Therefore, preferably $F/B_2O_3$ is 0.2-5.0, and more preferably $F/B_2O_3$ is 0.3-2.0. Furthermore, controlling $F/B_2O_3$ in the range of 0.4-1.5 can further optimize the bubble degree and abrasiveness of the glass. Therefore, further preferably $F/B_2O_3$ is 0.4-1.5, and further more preferably $F/B_2O_3$ is 0.5-0.9.

In some embodiments, controlling the ratio $Al_2O_3/F$ between the content of $Al_2O_3$ and the content of F to less than 1.0 can prevent a decrease in the ultraviolet transmittance and weather resistance of the glass. Therefore, preferably $Al_2O_3$ is less than 1.0, and more preferably $Al_2O_3$ is less than 0.8. Furthermore, controlling $Al_2O_3/F$ in the range of 0.01-0.5 can further improve the stripe degree of the glass. Therefore, further preferably $Al_2O_3/F$ is 0.01-0.5, and further more preferably $Al_2O_3/F$ is 0.07-0.3.

In some embodiments, controlling the ratio $K_2O/F$ between the content of $K_2O$ and the content of F in the range of 0.7-7.0 is beneficial to improving the stripe degree and ultraviolet radiation resistance of the glass, and improving the refractive index batch stability of the glass. Therefore, preferably $K_2O/F$ is 0.7-7.0, more preferably $K_2O/F$ is 1.0-5.0, further preferably $K_2O/F$ is 1.5-3.0, and further more preferably $K_2O/F$ is 1.8-2.8.

In some embodiments, controlling the ratio $SiO_2/(K_2O+F)$ of the content of $SiO_2$ to the total content $K_2O+F$ of $K_2O$ and F in the range of 1.2-4.5 is beneficial for the glass to achieve appropriate abrasiveness and transition temperature. Therefore, preferably $SiO_2/(K_2O+F)$ is 1.2-4.5, and more preferably $SiO_2/(K_2O+F)$ is 1.3-3.5. Furthermore, controlling

$SiO_2/(K_2O+F)$ in the range of 1.5-3.0 can further improve the bubble degree and ultraviolet transmittance of the glass. Therefore, further preferably $SiO_2/(K_2O+F)$ is 1.5-3.0, and further more preferably $SiO_2/(K_2O+F)$ is 1.7-2.5.

In some embodiments, the ratio $(ZrO_2+Nb_2O_5+TiO_2)/F$ of the total content $ZrO_2+Nb_2O_5+TiO_2$ of $ZrO_2$, $Nb_2O_5$ and $TiO_2$ to the content of F is controlled in the range of 0.01-1.0, so that the glass has an excellent anti-ultraviolet irradiation performance and a low transition temperature while also having appropriate abrasiveness. Therefore, preferably $(ZrO_2+Nb_2O_5+TiO_2)/F$ is 0.01-1.0, more preferably $(ZrO_2+Nb_2O_5+TiO_2)/F$ is 0.01-0.8, further preferably $(ZrO_2+Nb_2O_5+TiO_2)/F$ is 0.02-0.6, and further more preferably $(ZrO_2+Nb_2O_5+TiO_2)/F$ is 0.03-0.4.

<Components that should not be contained>

In the glass of the present invention, even if the oxides of transition metals such as V, Cr, Mn, Fe, Co, Ni, Cu, Ag, and Mo are contained in small amounts alone or in combination, the glass is colored and absorption occurs at a specific wavelength in the visible light region, thereby weakening the property of the effect of improving visible light transmittance of the present invention. Therefore, especially for the optical glass that has a requirement for transmittance at visible light wavelengths, it is preferred not to actually contain them.

The oxides of Th, Cd, Tl, Os, Be, and Se have shown a tendency to be controlled in use as harmful chemicals in recent years. Environmental protection measures are necessary not only in the manufacturing process of the glass, but also in the processing process and disposal after productization. Therefore, in a case where the impact on the environment is valued, it is preferred that they are not actually contained except that they are inevitably mixed. As a result, optical glass becomes actually free of substances that pollute the environment. Therefore, even without taking special environmental measures, the optical glass of the present invention can be manufactured, processed, and discarded.

In order to achieve environmental friendliness, the optical glass of the present invention preferably does not contain $As_2O_3$ and PbO.

The terms "does not contain" and "0%" mentioned herein refer to the fact that the compound, molecule, or element was not intentionally added as a raw material to the optical glass of the present invention; however, as raw materials and/or equipment for producing optical glass, there may be certain impurities or components that are not intentionally added and may be present in small or trace amounts in the final optical glass, and this situation is also within the scope of protection of the present invention patent.

The performance of the optical glass of the present invention will be described below.

<Refractive index and Abbe number>

The refractive index ($n_d$) and Abbe number ($v_d$) of the optical glass are tested according to the method specified in GB/T 7962.1-2010.

In some embodiments, the optical glass of the present invention has a lower limit of the refractive index ($n_d$) of 1.45, preferably a lower limit of 1.46, and more preferably a lower limit of 1.47. In some embodiments, the optical glass of the present invention has an upper limit of the refractive index ($n_d$) of 1.51, preferably an upper limit of 1.50, and more preferably an upper limit of 1.49.

In some embodiments, the optical glass of the present invention has a lower limit of the Abbe number ($v_d$) of 66, preferably a lower limit of 68, and more preferably a lower limit of 69. In some embodiments, the optical glass of the present invention has an upper limit of the Abbe number ($v_d$) of 74, preferably an upper limit of 72, and more preferably an upper limit of 71.

<Transmittance at 365 nm $\tau_{365nm}$>

The ultraviolet transmittance of the optical glass of the present invention is characterized by the transmittance at 365nm, the transmittance at 365nm ($\tau_{365nm}$) is tested according to the method specified in GB/T7962.12-2010, and the thickness of the glass sample is 10 mm.

In some embodiments, the optical glass of the present invention has transmittance at 365 nm ($\tau_{365nm}$) more than 98.0%, preferably more than 99.0%, and more preferably more than 99.5%.

<Ultraviolet radiation resistance performance>

The ultraviolet radiation resistance performance of optical glass is characterized by $\Delta\tau_{365nm}$ or $\Delta\tau_{405nm}$. $\Delta\tau_{365nm}$ refers to a transmittance at 365 nm resistance to ultraviolet radiation attenuation performance, and $\Delta\tau_{405nm}$ refers to a transmittance at 405 nm resistance to ultraviolet radiation attenuation performance. The lower $\Delta\tau_{365nm}$ or $\Delta\tau_{405nm}$, the better the ultraviolet radiation resistance performance of the glass.

The test method of $\Delta\tau_{365nm}$ is as follows: testing the original transmittance at 365 nm $\tau_{365nm-1}$ of the sample

according to the method specified in GB/T7962.12-2010, then using a high-pressure mercury lamp for irradiation, where the glass surface has a power density of 1 W/cm$^2$, and after 2 hours of irradiation, testing the transmittance at 365 nm $\tau_{365nm-2}$ again according to the method specified in GB/T7962.12-2010. The difference between the two tests, $\tau_{365nm-1}$-$\tau_{365nm-2}$, is the attenuation of the glass at the wavelength. The thickness of the glass sample is 10 mm.

In some embodiments, the optical glass of the present invention has a transmittance at 365 nm resistance to ultraviolet radiation attenuation performance ($\Delta\tau_{365nm}$) less than 1.0%, preferably less than 0.9%, and more preferably less than 0.8%.

The test method of $\Delta\tau_{405nm}$ is as follows: testing the original transmittance at 405 nm $\Delta\tau_{405nm-1}$ of the sample according to the method specified in GB/T7962.12-2010, then using a high-pressure mercury lamp for irradiation, where the glass surface has a power density of 1 W/cm$^2$, and after 2 hours of irradiation, testing the transmittance at 405 nm $\Delta\tau_{405nm-2}$ again according to the method specified in GB/T7962.12-2010. The difference between the two tests, $\tau_{405nm-1}$-$\tau_{405nm-2}$, is the attenuation of the glass at the wavelength. The thickness of the glass sample is 10 mm.

In some embodiments, the optical glass of the present invention has a transmittance at 405 nm resistance to ultraviolet radiation attenuation performance ($\Delta\tau_{405nm}$) less than 0.5%, preferably less than 0.3%, and more preferably less than 0.2%.

<Bubble degree>

The bubble density of the optical glass is measured and graded according to the method specified in GB/T 7962.8-2010.

In some embodiments, the optical glass of the present invention has a bubble degree above grade A, preferably above grade $A_0$, and more preferably above grade $A_{00}$.

<Stripe degree>

The test method of the stripe degree of the optical glass is as follows: using a point light source and a lens to form a stripe meter, comparing with a standard sample from the direction where stripes are most easily visible, and dividing it into four grades according to Table 1.

Table 1. Grading criteria for the stripe degree

| Grade | Stripe degree |
|-------|---------------|
| A | No visible stripes to the naked eye under the specified test conditions |
| B | Fine and scattered stripes under the specified conditions |
| C | Slight parallel stripes under the specified conditions |
| D | Rough parallel stripes under the specified conditions |

In some embodiments, the optical glass of the present invention has a stripe degree above grade C, and preferably above grade B.

<Weather resistance>

The test method of the weather resistance (CR) of the optical glass is as follows: place a sample in a test chamber in a saturated water vapor environment with 90% relative humidity, and circulating alternately every 1 hour at 40-50°C for 15 cycles. The weather resistance category is classified according to the turbidity change before and after the sample is placed. The weather resistance classification is shown in Table 2:

Table 2. Classification criteria for the weather resistance

| Category | 1 | 2 | 3 | 4 | | |
|----------|---|---|---|---|---|---|
| | | | | a | b | c |
| Turbidity increase $\Delta$H (%) | <0.3 | 0.3~1.0 | 1.0~2.0 | 2.0~4.0 | 4.0~6.0 | ≥6.0 |

In some embodiments, the optical glass of the present invention has weather resistance (CR) above class 2, preferably of class 1.

<Transition temperature>

The transition temperature ($T_g$) of the optical glass is tested according to the method specified in GB/T7962.16-2010.

In some embodiments, the optical glass of the present invention has a transition temperature ($T_g$) less than 490°C, preferably less than 480°C, and more preferably less than 475°C.

<Abrasiveness>

The abrasiveness ($F_A$) of optical glass refers to the value obtained by multiplying the ratio of the abrasion amount (volume) of a sample to the abrasion amount (volume) of a standard sample (H-K9 glass) under exactly the same conditions by 100, and is shown by the formula as follows:

$$F_A = V/V_0 \times 100 = (W/\rho)/(W_0/\rho_0) \times 100$$

In the formula: V-volume abrasion amount of the tested sample;
$V_0$-volume abrasion amount of the standard sample;

W-mass abrasion amount of the tested sample;
$W_0$-mass abrasion amount of the standard sample;
$\rho$-density of the tested sample; and
$\rho_0$-density of the standard sample.

In some embodiments, the optical glass of the present invention has a lower limit of abrasiveness ($F_A$) of 60, preferably 65, and more preferably 70.

In some embodiments, the optical glass of the present invention has the upper limit of abrasiveness ($F_A$) of 90, preferably 85, and more preferably 80.

<Density>

The density ($\rho$) of the optical glass is tested according to the method specified in GB/T7962.20-2010.

In some embodiments, the optical glass of the present invention has a density ($\rho$) less than 2.70 g/cm$^3$, preferably less than 2.60 g/cm$^3$, and more preferably less than 2.50 g/cm$^3$.

<Refractive index batch stability>

The test method of refractive index batch stability of the optical glass is as follows: using the same glass formula, manufacturing method and device, performing separate smelting twice before and after, obtaining the glass smelted twice before and after, and then according to the method specified in GB/T 7962.1-2010, testing the refractive index $n_{d\ before}$ of the previous glass and the refractive index $n_{d\ after}$ of the subsequent glass. Then $n_{d\ after} - n_{d\ after}$ is the refractive index batch stability of the glass material.

In some embodiments, the optical glass of the present invention has refractive index batch stability of $-15 \times 10^{-5}$-$+15 \times 10^{-5}$, preferably $-10 \times 10^{-5}$-$+10 \times 10^{-5}$, more preferably $-5 \times 10^{-5}$-$+5 \times 10^{-5}$, and further preferably $-2 \times 10^{-5}$-$+2 \times 10^{-5}$.

[Manufacturing method of the optical glass]

The manufacturing method of the optical glass of the present invention is as follows: producing the glass of the present invention using conventional raw materials and conventional processes, using carbonates, nitrates, sulfates, phosphates, metaphosphates, hydroxides, oxides, fluorides, etc. as raw materials, after being prepared according to conventional methods, putting the prepared furnace materials into a smelting furnace (such as platinum crucible, quartz crucible, etc.) at 1200-1450°C for melting, clarifying, stirring and homogenizing to obtain homogeneous molten glass without bubbles and undissolved substances, and casting the molten glass in a mold and annealing. Those skilled in the art can select raw materials, process methods, and process parameters appropriately according to actual needs.

[Glass preform and optical element]

The glass preform can be made of the obtained optical glass by means of abrasive machining, polishing processing, or compression molding such as hot compression molding, for example. That is, the glass preform can be made by direct precision drop molding of molten optical glass into a precision glass preform, or by machining such as cutting and grinding, or by making a preformed product for compression molding from optical glass, and rehot-press molding the preformed product, followed by abrasive machining. It should be noted that the means for preparing the glass preform are not limited to the above-described means.

As described above, the optical glass of the present invention is useful for various optical elements and optical designs, among which it is particularly preferred to form a preformed product from the optical glass of the present invention, and use the preformed product for rehot-pressing, precision punch molding, etc., to make optical elements such as lenses and prisms.

The glass preform and optical element of the present invention are both formed from the optical glass of the present invention as described above. The glass preform of the present invention possesses excellent characteristics of the optical glass; the optical element of the present invention possesses excellent characteristics of the optical glass and can provide various optical elements such as lenses and prisms with high optical value.

As examples of lenses, various lenses such as concave meniscus lenses, convex meniscus lenses, biconvex lenses, biconcave lenses, plano-convex lenses, and plano-concave lenses with spherical or aspherical lens surfaces can be cited.

[Optical instrument]

The optical element formed by the optical glass of the present invention can be used to make optical instruments such as photographic equipment, camera equipment, projection equipment, display equipment, lithography machines, on-board equipment, and monitoring equipment.

Examples

<Optical glass examples>

In order to further clarify and illustrate the technical solution of the present invention, the following non-limiting examples are provided.

These examples adopted the manufacturing method of the optical glass described above to obtain optical glass with the components shown in Tables 3-5. In addition, the characteristics of each glass were measured using the test methods described in the present invention, and the measurement results are shown in Tables 3-5.

Table 3

| Example (wt%) | 1# | 2# | 3# | 4# | 5# | 6# | 7# |
|---|---|---|---|---|---|---|---|
| $SiO_2$ | 63.2 | 56.28 | 58.68 | 51.69 | 54.3 | 67.12 | 51.84 |
| $B_2O_3$ | 3.26 | 4.72 | 16.32 | 13.37 | 6.24 | 5.52 | 7.36 |
| $Al_2O_3$ | 0.52 | 3.55 | 2.17 | 0.38 | 1.22 | 1.74 | 2.53 |
| $ZrO_2$ | 0.36 | 0 | 0.52 | 2.75 | 0.1 | 0 | 0 |
| $K_2O$ | 12.35 | 12.63 | 13.16 | 24.2 | 27.65 | 15.27 | 22.14 |
| $Na_2O$ | 5.23 | 2.57 | 0 | 1.2 | 0 | 0.5 | 0 |
| $Li_2O$ | 0 | 1.25 | 0.8 | 0 | 3.34 | 2.05 | 0 |
| $La_2O_3$ | 0 | 0 | 0 | 2.1 | 0 | 0 | 0.8 |
| $Gd_2O_3$ | 0 | 0 | 0 | 0 | 0.5 | 0 | 0 |
| $Y_2O_3$ | 0 | 0 | 0 | 0 | 0.5 | 0 | 0 |
| $Yb_2O_3$ | 0 | 0 | 0 | 0 | 0 | 0 | 0 |
| $Nb_2O_5$ | 0 | 1.68 | 0 | 0.6 | 0 | 0.25 | 0.57 |
| $TiO_2$ | 0.58 | 0 | 1.55 | 0 | 1.12 | 0 | 0.1 |
| $WO_3$ | 0.1 | 0 | 0 | 0.14 | 0 | 0 | 0.32 |
| $Ta_2O_5$ | 0 | 0.15 | 0 | 0 | 0.2 | 0 | 0 |
| $Bi_2O_3$ | 0 | 0 | 0.2 | 0 | 0 | 0.15 | 0 |
| $BaO$ | 0 | 0 | 0 | 0 | 0 | 1 | 0 |
| $SrO$ | 0.35 | 0 | 0 | 0 | 0 | 0 | 0 |
| $CaO$ | 0 | 0 | 0 | 0 | 0 | 0 | 0 |
| $MgO$ | 0 | 0 | 0.5 | 0 | 0 | 0 | 0 |
| $ZnO$ | 0 | 0 | 0.83 | 0 | 0.3 | 0 | 0.1 |
| $P_2O_5$ | 0 | 0 | 0 | 0 | 0 | 0 | 1 |
| $Sb_2O_3$ | 0 | 0.1 | 0 | 0 | 0 | 0 | 0 |
| $SnO_2$ | 0 | 0 | 0 | 0 | 0 | 0.05 | 0 |
| $CeO_2$ | 0 | 0 | 0 | 0.05 | 0 | 0 | 0 |
| F | 14.05 | 17.07 | 5.27 | 3.52 | 4.53 | 6.35 | 13.24 |

| Example (wt%) | 1# | 2# | 3# | 4# | 5# | 6# | 7# |
|---|---|---|---|---|---|---|---|
| 合计 | 100 | 100 | 100 | 100 | 100 | 100 | 100 |
| $F/B_2O_3$ | 4.310 | 3.617 | 0.323 | 0.263 | 0.726 | 1.150 | 1.799 |
| $Al_2O_3/F$ | 0.037 | 0.208 | 0.412 | 0.108 | 0.269 | 0.274 | 0.191 |
| $(Nb_2O_5+TiO_2+Bi_2O_3+Ta_2O_5+WO_3)/B_2O_3$ | 0.209 | 0.388 | 0.107 | 0.055 | 0.212 | 0.072 | 0.135 |
| $(Nb_2O_5+TiO_2)/Al_2O_3$ | 1.115 | 0.473 | 0.714 | 1.579 | 0.918 | 0.144 | 0.265 |
| $(Li_2O+Na_2O+K_2O)/B_2O_3$ | 5.393 | 3.485 | 0.855 | 1.9 | 4.966 | 3.228 | 3.008 |
| $(Li_2O+Na_2O+K_2O)/SiO_2$ | 0.278 | 0.292 | 0.238 | 0.491 | 0.571 | 0.265 | 0.427 |
| $K_2O/F$ | 0.879 | 0.740 | 2.497 | 6.875 | 6.104 | 2.405 | 1.672 |
| $SiO_2/(K_2O+F)$ | 2.394 | 1.895 | 3.184 | 1.865 | 1.687 | 3.105 | 1.465 |
| $(ZrO_2+Nb_2O_5+TiO_2)/F$ | 0.067 | 0.098 | 0.393 | 0.952 | 0.269 | 0.039 | 0.051 |
| $n_d$ | 1.4633 5 | 1.5018 2 | 1.4968 5 | 1.5045 8 | 1.5053 7 | 1.4545 3 | 1.4914 6 |
| $\nu_d$ | 72.26 | 67.25 | 68.38 | 66.36 | 71.43 | 73.42 | 69.14 |
| $\tau_{365nm}$ (%) | 99.2 | 99.3 | 98.8 | 99.4 | 99.4 | 99.3 | 99.2 |
| $\Delta\tau_{365nm}$ (%) | 0.8 | 0.8 | 0.7 | 0.9 | 0.6 | 0.6 | 0.7 |
| $\Delta\tau_{405nm}$ (%) | 0.4 | 0.3 | 0.2 | 0.5 | 0.2 | 0.2 | 0.3 |
| Bubble degree (grade) | $A_0$ | $A_0$ | $A_0$ | $A_0$ | $A_{00}$ | $A_{00}$ | $A_0$ |
| Stripe degree (grade) | C | B | B | C | C | B | B |
| CR (class) | 1 | 1 | 1 | 1 | 1 | 1 | 1 |
| $T_g$ (°C) | 468 | 470 | 485 | 480 | 472 | 481 | 473 |
| $F_A$ | 66 | 71 | 67 | 63 | 73 | 68 | 73 |
| $\rho$ (g/cm$^3$) | 2.55 | 2.54 | 2.51 | 2.52 | 2.53 | 2.51 | 2.51 |
| Refractive index batch stability ($\times 10^{-5}$) | -5 | -6 | 6 | 6 | 5 | -6 | -5 |

EP 4 527 810 A1

Table 4

| Example (wt%) | 8# | 9# | 10# | 11# | 12# | 13# | 14# |
|---|---|---|---|---|---|---|---|
| $SiO_2$ | 61.7 | 59.16 | 59.38 | 57.87 | 62.4 | 57.4 | 55.29 |
| $B_2O_3$ | 11.24 | 10.38 | 9.34 | 12.28 | 9.25 | 8.52 | 11.73 |
| $Al_2O_3$ | 1.52 | 1.46 | 0.75 | 0.88 | 1.08 | 1.24 | 1.15 |
| $ZrO_2$ | 0.22 | 0.57 | 0.63 | 0 | 0.21 | 0.18 | 0.25 |
| $K_2O$ | 18.56 | 20.38 | 21.41 | 19.36 | 18.47 | 20.65 | 21.17 |
| $Na_2O$ | 0 | 0 | 0 | 0 | 0 | 0 | 0 |
| $Li_2O$ | 0 | 0 | 0 | 0 | 0 | 0 | 0 |
| $La_2O_3$ | 0 | 0 | 0 | 0 | 0 | 0 | 0 |
| $Gd_2O_3$ | 0 | 0 | 0 | 0 | 0 | 0 | 0 |
| $Y_2O_3$ | 0 | 0 | 0 | 0 | 0 | 0 | 0 |
| $Yb_2O_3$ | 0 | 0 | 0 | 0 | 0 | 0 | 0 |
| $Nb_2O_5$ | 0.22 | 0 | 0.05 | 0.05 | 0 | 0.1 | 0 |
| $TiO_2$ | 0.28 | 0.35 | 0.33 | 0.41 | 0.27 | 0.53 | 0.24 |
| $WO_3$ | 0 | 0.1 | 0 | 0.1 | 0.2 | 0 | 0 |
| $Ta_2O_5$ | 0 | 0.1 | 0 | 0 | 0 | 0 | 0 |
| $Bi_2O_3$ | 0 | 0.05 | 0 | 0 | 0 | 0 | 0.1 |
| BaO | 0 | 0 | 0 | 0 | 0 | 0 | 0 |
| SrO | 0 | 0 | 0 | 0 | 0 | 0 | 0 |
| CaO | 0 | 0 | 0 | 0 | 0 | 0 | 0 |
| MgO | 0 | 0 | 0 | 0 | 0 | 0 | 0 |
| ZnO | 0 | 0 | 0 | 0 | 0 | 0 | 0 |
| $P_2O_5$ | 0 | 0 | 0 | 0 | 0 | 0 | 0 |
| $Sb_2O_3$ | 0 | 0 | 0 | 0 | 0 | 0 | 0 |
| $SnO_2$ | 0 | 0 | 0 | 0 | 0 | 0 | 0 |
| $CeO_2$ | 0 | 0 | 0 | 0 | 0 | 0 | 0 |
| F | 6.26 | 7.45 | 8.11 | 9.05 | 8.12 | 11.38 | 10.07 |

(continued)

| Example (wt%) | 8# | 9# | 10# | 11# | 12# | 13# | 14# |
|---|---|---|---|---|---|---|---|
| Total | 100 | 100 | 100 | 100 | 100 | 100 | 100 |
| $F/B_2O_3$ | 0.557 | 0.718 | 0.868 | 0.737 | 0.878 | 1.336 | 0.858 |
| $Al_2O_3/F$ | 0.243 | 0.196 | 0.092 | 0.097 | 0.133 | 0.109 | 0.114 |
| $(Nb_2O_5+TiO_2+Bi_2O_3+Ta_2O_5+WO_3)/B_2O_3$ | 0.044 | 0.058 | 0.041 | 0.046 | 0.051 | 0.074 | 0.029 |
| $(Nb_2O_5+TiO_2)/Al_2O_3$ | 0.329 | 0.24 | 0.507 | 0.523 | 0.25 | 0.508 | 0.209 |
| $(Li_2O+Na_2O+K_2O)/B_2O_3$ | 1.651 | 1.963 | 2.292 | 1.577 | 1.997 | 2.424 | 1.805 |
| $(Li_2O+Na_2O+K_2O)/SiO_2$ | 0.301 | 0.344 | 0.361 | 0.335 | 0.296 | 0.36 | 0.383 |
| $K_2O/F$ | 2.965 | 2.736 | 2.64 | 2.139 | 2.275 | 1.815 | 2.102 |
| $SiO_2/(K_2O+F)$ | 2.486 | 2.126 | 2.012 | 2.037 | 2.347 | 1.792 | 1.77 |
| $(ZrO_2+Nb_2O_5+TiO_2)/F$ | 0.115 | 0.123 | 0.125 | 0.051 | 0.059 | 0.071 | 0.049 |
| $n_d$ | 1.4793 5 | 1.4822 5 | 1.4816 7 | 1.4852 7 | 1.4785 2 | 1.4872 5 | 1.4821 3 |
| $\nu_d$ | 70.82 | 69.57 | 70.35 | 70.15 | 69.82 | 68.64 | 70.26 |
| $\tau_{365nm}$ (%) | 99.7 | 99.8 | 99.6 | 99.8 | 99.7 | 99.8 | 99.8 |
| $\Delta\tau_{365nm}$ (%) | 0.5 | 0.6 | 0.6 | 0.5 | 0.4 | 0.5 | 0.3 |
| $\Delta\tau_{405nm}$ (%) | 0.1 | 0.1 | 0.1 | 0.1 | 0.1 | 0.1 | 0.1 |
| Bubble degree (grade) | $A_{00}$ | $A_{00}$ | $A_{00}$ | $A_{00}$ | $A_{00}$ | $A_{00}$ | $A_{00}$ |
| Stripe degree (grade) | B | B | B | B | B | B | B |
| CR (class) | 1 | 1 | 1 | 1 | 1 | 1 | 1 |
| $T_g$ (°C) | 462 | 465 | 468 | 465 | 467 | 468 | 462 |
| $F_A$ | 77 | 75 | 76 | 74 | 73 | 74 | 72 |
| $\rho$ (g/cm³) | 2.48 | 2.45 | 2.46 | 2.43 | 2.41 | 2.45 | 2.44 |
| Refractive index batch stability ($\times 10^{-5}$) | -2 | -1 | 2 | 1 | 2 | -1 | -1 |

Table 5

| Example (wt%) | 15# | 16# | 17# | 18# | 19# | 20# | 21# |
|---|---|---|---|---|---|---|---|
| $SiO_2$ | 60.95 | 53.76 | 58.35 | 59.59 | 55.19 | 59.4 | 62.03 |
| $B_2O_3$ | 8.17 | 9.33 | 8.83 | 12.26 | 11.42 | 10.63 | 9.84 |
| $Al_2O_3$ | 2.26 | 2.06 | 1.17 | 1.05 | 0.86 | 0.92 | 1.37 |
| $ZrO_2$ | 1.42 | 2.23 | 0.84 | 0.95 | 1.14 | 0.26 | 0.48 |
| $K_2O$ | 20.08 | 23.65 | 18.45 | 16.22 | 21.43 | 19.08 | 17.45 |
| $Na_2O$ | 0 | 0 | 0 | 0 | 0 | 0 | 0 |
| $Li_2O$ | 0.45 | 0 | 0 | 0 | 0 | 0 | 0 |
| $La_2O_3$ | 0 | 0 | 0 | 0 | 0 | 0 | 0 |
| $Gd_2O_3$ | 0 | 0 | 0 | 0 | 0 | 0 | 0 |
| $Y_2O_3$ | 0 | 0 | 0 | 0 | 0 | 0 | 0 |
| $Yb_2O_3$ | 0 | 0 | 0 | 0 | 0 | 0 | 0 |
| $Nb_2O_5$ | 0 | 0.15 | 0.08 | 0 | 0.32 | 0.1 | 0 |
| $TiO_2$ | 0.12 | 0.08 | 0.22 | 0.45 | 0 | 0.22 | 0.17 |
| $WO_3$ | 0 | 0 | 0 | 1.25 | 0 | 0.08 | 0 |
| $Ta_2O_5$ | 0 | 0 | 0 | 0 | 0.1 | 0.05 | 0.13 |
| $Bi_2O_3$ | 0.1 | 0 | 0 | 0 | 0.12 | 0.1 | 0 |
| BaO | 0 | 0 | 0 | 0 | 0 | 0 | 0 |
| SrO | 0 | 0 | 0 | 0 | 0 | 0 | 0 |
| CaO | 0 | 0.5 | 0 | 0 | 0 | 0 | 0 |
| MgO | 0 | 0 | 0 | 0 | 0 | 0 | 0 |
| ZnO | 0 | 0 | 0 | 0 | 0 | 0 | 0 |
| $P_2O_5$ | 0 | 0.5 | 0 | 0 | 0 | 0 | 0 |
| $Sb_2O_3$ | 0 | 0 | 0 | 0 | 0 | 0 | 0 |
| $SnO_2$ | 0.1 | 0 | 0 | 0 | 0 | 0 | 0 |
| $CeO_2$ | 0 | 0 | 0 | 0 | 0 | 0 | 0 |
| F | 6.35 | 7.74 | 12.06 | 8.23 | 9.42 | 9.16 | 8.53 |

(continued)

| Example (wt%) | 15# | 16# | 17# | 18# | 19# | 20# | 21# |
|---|---|---|---|---|---|---|---|
| 合计 | 100 | 100 | 100 | 100 | 100 | 100 | 100 |
| $F/B_2O_3$ | 0.777 | 0.83 | 1.366 | 0.671 | 0.825 | 0.862 | 0.867 |
| $Al_2O_3/F$ | 0.356 | 0.266 | 0.097 | 0.128 | 0.091 | 0.100 | 0.161 |
| $(Nb_2O_5+TiO_2+Bi_2O_3+Ta_2O_5+WO_3)/B_2O_3$ | 0.027 | 0.025 | 0.034 | 0.139 | 0.047 | 0.052 | 0.03 |
| $(Nb_2O_5+TiO_2)/Al_2O_3$ | 0.053 | 0.112 | 0.256 | 0.429 | 0.372 | 0.348 | 0.124 |
| $(Li_2O+Na_2O+K_2O)/B_2O_3$ | 2.513 | 2.535 | 2.089 | 1.323 | 1.877 | 1.795 | 1.773 |
| $(Li_2O+Na_2O+K_2O)/SiO_2$ | 0.337 | 0.44 | 0.316 | 0.272 | 0.388 | 0.321 | 0.281 |
| $K_2O/F$ | 3.162 | 3.056 | 1.53 | 1.971 | 2.275 | 2.083 | 2.046 |
| $SiO_2/(K_2O+F)$ | 2.306 | 1.713 | 1.912 | 2.437 | 1.789 | 2.103 | 2.388 |
| $(ZrO_2+Nb_2O_5+TiO_2)/F$ | 0.243 | 0.318 | 0.095 | 0.17 | 0.155 | 0.063 | 0.076 |
| $n_d$ | 1.4583 4 | 1.4653 7 | 1.4735 2 | 1.4801 8 | 1.4868 5 | 1.4830 6 | 1.4753 4 |
| $\nu_d$ | 72.68 | 71.16 | 70.55 | 68.52 | 69.35 | 70.52 | 71.05 |
| $\tau_{365nm}$ (%) | 99.6 | 99.8 | 99.5 | 99.7 | 99.8 | 99.8 | 99.9 |
| $\Delta\tau_{365nm}$ (%) | 0.7 | 0.6 | 0.5 | 0.6 | 0.6 | 0.5 | 0.3 |
| $\Delta\tau_{405nm}$ (%) | 0.4 | 0.1 | 0.1 | 0.1 | 0.2 | 0.1 | 0.1 |
| Bubble degree (grade) | $A_{00}$ | $A_{00}$ | $A_{00}$ | $A_{00}$ | $A_{00}$ | $A_{00}$ | $A_{00}$ |
| Stripe degree (grade) | C | C | B | B | B | B | B |
| CR (class) | 1 | 1 | 1 | 1 | 1 | 1 | 1 |
| $T_g$(°C) | 470 | 465 | 463 | 466 | 469 | 470 | 468 |
| $F_A$ | 82 | 75 | 81 | 74 | 76 | 74 | 75 |
| $\rho$ (g/cm$^3$) | 2.48 | 2.43 | 2.49 | 2.47 | 2.48 | 2.46 | 2.44 |
| Refractive index batch stability ($\times10^{-5}$) | 5 | 4 | -3 | 2 | -1 | 1 | 3 |

<Glass preform examples>

Preforms of various lenses, prisms, etc. such as concave meniscus lenses, convex meniscus lenses, biconvex lenses, biconcave lenses, plano-convex lenses, and plano-concave lenses were made of the glass obtained in the optical glass examples 1-21 using, for example, an abrasive machining method or a compression molding method such as rehot-press molding and precision punch molding.

<Optical element examples>

The preforms obtained by the above-described glass preform examples were annealed, and the refractive index was fine-tuned while reducing the internal stress of the glass, so that optical properties such as the refractive index reached a desired value.

Next, each preform was cut and ground to make various lenses and prisms such as concave meniscus lenses, convex meniscus lenses, biconvex lenses, biconcave lenses, plano-convex lenses, and plano-concave lenses. The surface of the obtained optical element can also be coated with an anti-reflection film.

<Optical instrument examples>

The optical elements made by the above-described optical element examples can be used, for example, in imaging devices, sensors, microscopes, medical technology, digital projection, communication, optical communication technology/information transmission, optics/illumination in the automotive field, photolithography, excimer lasers, wafers, computer chips, and integrated circuits and electronic devices including such circuits and chips by optical designs, by forming optical components or optical assemblies using one or more optical elements.

Further advantageous embodiments are covered by the examples below.

1. An optical glass, characterized in that the optical glass comprises the following components in percentage by weight: 50-70% of $SiO_2$; 2-18% of $B_2O_3$; 10-30% of $K_2O$; and greater than 3% but less than or equal to 20% of F, wherein $SiO_2/(K_2O+F)$ is 1.2-4.5.

2. The optical glass according to embodiment 1, characterized in that the optical glass further comprises the following components in percentage by weight: 0-5% of $Al_2O_3$; and/or 0-2% of $Nb_2O_5$; and/or 0-2% of $TiO_2$; and/or 0-3% of $ZrO_2$; and/or 0-7% of $Na_2O$; and/or 0-5% of $Li_2O$; and/or 0-5% of $Ln_2O_3$; and/or 0-2% of $WO_3$; and/or 0-3% of $Ta_2O_5$; and/or 0-2% of $Bi_2O_3$; and/or 0-8% of RO; and/or 0-5% of ZnO; and/or 0-3% of $P_2O_5$; and/or 0-1% of a clarifying agent, wherein the $Ln_2O_3$ is one or more of $La_2O_3$, $Gd_2O_3$, $Y_2O_3$, and $Yb_2O_3$, the RO is one or more of BaO, SrO, CaO, and MgO, and the clarifying agent is one or more of $Sb_2O_3$, $SnO_2$ and $CeO_2$.

3. An optical glass, characterized in that the optical glass comprises the following components in percentage by weight: $SiO_2$, $B_2O_3$, $K_2O$, and F, wherein $SiO_2/(K_2O+F)$ is 1.2-4.5, and the optical glass has a refractive index $n_d$ of 1.45-1.51, an Abbe number $v_d$ of 66-74, a transition temperature $T_g$ less than 490°C, and a density $\rho$ less than 2.70 $g/cm^3$.

4. The optical glass according to embodiment 3, characterized in that the optical glass comprises the following components in percentage by weight: 50-70% of $SiO_2$; and/or 2-18% of $B_2O_3$; and/or 10-30% of $K_2O$; and/or 0-2% of $Nb_2O_5$; and/or 0-2% of $TiO_2$; and/or 0-3% of $ZrO_2$; and/or greater than 3% but less than or equal to 20% of F; and/or 0-5% of $Al_2O_3$; and/or 0-7% of $Na_2O$; and/or 0-5% of $Li_2O$; and/or 0-5% of $Ln_2O_3$; and/or 0-2% of $WO_3$; and/or 0-3% of $Ta_2O_5$; and/or 0-2% of $Bi_2O_3$; and/or 0-8% of RO; and/or 0-5% of ZnO; and/or 0-3% of $P_2O_5$; and/or 0-1% of a clarifying agent, wherein the $Ln_2O_3$ is one or more of $La_2O_3$, $Gd_2O_3$, $Y_2O_3$, and $Yb_2O_3$, the RO is one or more of BaO, SrO, CaO, and MgO, and the clarifying agent is one or more of $Sb_2O_3$, $SnO_2$ and $CeO_2$.

5. The optical glass according to any one of embodiments 1-4, characterized in that the components of the optical glass in percentage by weight meet one or more of the following 5 conditions:

1) $F/B_2O_3$ is 0.2-5.0, preferably $F/B_2O_3$ is 0.3-2.0, more preferably $F/B_2O_3$ is 0.4-1.5, and further preferably $F/B_2O_3$ is 0.5-0.9;
2) $Al_2O_3/F$ is less than 1.0, preferably $Al_2O_3/F$ is less than 0.8, more preferably $Al_2O_3/F$ is 0.01-0.5, and further preferably $Al_2O_3/F$ is 0.07-0.3;
3) $K_2O/F$ is 0.7-7.0, preferably $K_2O/F$ is 1.0-5.0, more preferably $K_2O/F$ is 1.5-3.0, and further preferably $K_2O/F$ is 1.8-2.8;
4) $SiO_2/(K_2O+F)$ is 1.3-3.5, preferably $SiO_2/(K_2O+F)$ is 1.5-3.0, and more preferably $SiO_2/(K_2O+F)$ is 1.7-2.5; and
5) $(ZrO_2+Nb_2O_5+TiO_2)/F$ is 0.01-1.0, preferably $(ZrO_2+Nb_2O_5+TiO_2)/F$ is 0.01-0.8, more preferably $(ZrO_2+Nb_2O_5+TiO_2)/F$ is 0.02-0.6, and further preferably $(ZrO_2+Nb_2O_5+TiO_2)/F$ is 0.03-0.4.

6. The optical glass according to any one of embodiments 1-4, characterized in that the components of the optical glass are shown in percentage by weight, wherein $(Nb_2O_5+TiO_2+Bi_2O_3+Ta_2O_5+WO_3)/B_2O_3$ is greater than 0 but less than or equal to 0.8, preferably $(Nb_2O_5+TiO_2+Bi_2O_3+Ta_2O_5+WO_3)/B_2O_3$ is 0.01-0.5, more preferably $(Nb_2O_5+TiO_2+Bi_2O_3+Ta_2O_5+WO_3)/B_2O_3$ is 0.01-0.3, and further preferably $(Nb_2O_5+TiO_2+Bi_2O_3+Ta_2O_5+WO_3)/B_2O_3$ is 0.02-0.2; and/or $(Nb_2O_5+TiO_2)/Al_2O_3$ is less than 2.0, preferably $(Nb_2O_5+TiO_2)/Al_2O_3$ is 0.01-1.5, more preferably $(Nb_2O_5+TiO_2)/Al_2O_3$ is 0.05-1.0, and further preferably $(Nb_2O_5+TiO_2)/Al_2O_3$ is 0.1-0.5; and/or $(Li_2O+Na_2O+K_2O)/B_2O_3$ is 0.7-6.0, preferably $(Li_2O+Na_2O+K_2O)/B_2O_3$ is 0.8-5.0, more preferably $(Li_2O+Na_2O+K_2O)/B_2O_3$ is 1.0-3.0, and further preferably $(Li_2O+Na_2O+K_2O)/B_2O_3$ is 1.5-2.0; and/or $(Li_2O+Na_2O+K_2O)/SiO_2$ is 0.15-0.8, preferably $(Li_2O+Na_2O+K_2O)/SiO_2$ is 0.18-0.7, more preferably $(Li_2O+Na_2O+K_2O)/SiO_2$ is 0.2-0.6, and further preferably $(Li_2O+Na_2O+K_2O)/SiO_2$ is 0.2-0.45.

7. The optical glass according to any one of embodiments 1-4, characterized in that the components of the optical glass are shown in percentage by weight, wherein $SiO_2$ is 52-68%, and preferably $SiO_2$ is 54-64%; and/or $B_2O_3$ is 4-16%, and preferably $B_2O_3$ is 8-14%; and/or $K_2O$ is 12-27%, and preferably $K_2O$ is 13-25%; and/or $Nb_2O_5$ is 0-1%, and preferably $Nb_2O_5$ is 0-0.8%; and/or $TiO_2$ is 0-1%, and preferably $TiO_2$ is 0-0.8%; and/or $ZrO_2$ is 0-2%, and preferably $ZrO_2$ is 0-1%; and/or F is 5-16%, and preferably F is 6-12%; and/or $Al_2O_3$ is 0.1-3%, and preferably $Al_2O_3$ is 0.2-2%; and/or $Na_2O$ is 0-5%, and preferably $Na_2O$ is 0-3%; and/or $Li_2O$ is 0-4%, and preferably $Li_2O$ is 0-3%; and/or the $Ln_2O_3$ is 0-3%, and preferably the $Ln_2O_3$ is 0-1%; and/or $WO_3$ is 0-1%, and preferably $WO_3$ is 0-0.5%; and/or $Ta_2O_5$ is 0-2%, and preferably $Ta_2O_5$ is 0-1%; and/or $Bi_2O_3$ is 0-1%, and preferably $Bi_2O_3$ is 0-0.5%; and/or the RO is 0-5%, and preferably the RO is 0-2%; and/or ZnO is 0-2%, and preferably ZnO is less than 1%; and/or $P_2O_5$ is 0-2%, and preferably $P_2O_5$ is 0-1%; and/or the clarifying agent is 0-0.5%, and preferably the clarifying agent is 0-0.2%, wherein the $Ln_2O_3$ is one or more of $La_2O_3$, $Gd_2O_3$, $Y_2O_3$, and $Yb_2O_3$, the RO is one or more of BaO, SrO, CaO, and MgO, and the clarifying agent is one or more of $Sb_2O_3$, $SnO_2$ and $CeO_2$.

8. The optical glass according to any one of embodiments 1-4, characterized in that the components of the optical glass do not comprise $Na_2O$; and/or the components do not comprise $Li_2O$; and/or the components do not comprise $La_2O_3$; and/or the components do not comprise $Gd_2O_3$; and/or the components do not comprise $Y_2O_3$; and/or the components do not comprise $Yb_2O_3$; and/or the components do not comprise ZnO; and/or the components do not comprise $P_2O_5$; and/or the components do not comprise BaO; and/or the components do not comprise SrO; and/or the components do not comprise CaO; and/or the components do not comprise MgO.

9. The optical glass according to any one of embodiments 1-4, characterized in that the optical glass has the refractive index $n_d$ of 1.45-1.51, preferably 1.46-1.50, and more preferably 1.47-1.49, and the Abbe number $v_d$ of 66-74, preferably 68-72, and more preferably 69-71.

10. The optical glass according to any one of embodiments 1-4, characterized in that the optical glass has transmittance at 365 nm $\tau_{365nm}$ more than 98.0%, preferably more than 99.0%, and more preferably more than 99.5%; and/or the optical glass has a transmittance at 365 nm resistance to ultraviolet radiation attenuation performance $\Delta\tau_{365nm}$ less than 1.0%, preferably less than 0.9%, and more preferably less than 0.8%; and/or the optical glass has a transmittance at 405 nm resistance to ultraviolet radiation attenuation performance $\Delta\tau_{405nm}$ less than 0.5%, preferably less than 0.3%, and more preferably less than 0.2%; and/or the optical glass has a bubble degree above grade A, preferably above grade $A_0$, and more preferably above grade $A_{00}$; and/or the optical glass has a stripe degree above grade C, and preferably above grade B; and/or the optical glass has weather resistance CR above class 2, and preferably of class 1; and/or the optical glass has the transition temperature $T_g$ less than 490°C, preferably less than 480°C, and more preferably less than 475°C; and/or the optical glass has abrasiveness $F_A$ of 60-90, preferably 65-85, and more preferably 70-80; and/or the optical glass has the density $\rho$ less than 2.70 g/cm$^3$, preferably less than 2.60 g/cm$^3$, and more preferably less than 2.50 g/cm$^3$; and/or the optical glass has refractive index batch stability of $-15\times10^{-5}$-$+15\times10^{-5}$, preferably $-10\times10^{-5}$-$+10\times10^{-5}$, more preferably $-5\times10^{-5}$-$+5\times10^{-5}$, and further preferably $-2\times10^{-5}$-$+2\times10^{-5}$.

11. A glass preform, characterized in that the glass preform is made of the optical glass according to any one of embodiments 1-10.

12. An optical element, characterized in that the optical element is made of the optical glass according to any one of embodiments 1-10, or made of the glass preform according to embodiment 11.

13. An optical instrument, characterized in that the optical element comprises the optical glass according to any one of embodiments 1-10, and/or comprises the optical element according to embodiment 12.

## Claims

1. An optical glass, **characterized in that** the optical glass comprises the following components in percentage by weight: 50-70% of $SiO_2$; 2-18% of $B_2O_3$; 10-30% of $K_2O$; and greater than 3% but less than or equal to 20% of F, wherein $SiO_2/(K_2O+F)$ is 1.2-4.5.

2. The optical glass according to claim 1, **characterized in that** the optical glass further comprises the following components in percentage by weight: 0-5% of $Al_2O_3$; and/or 0-2% of $Nb_2O_5$; and/or 0-2% of $TiO_2$; and/or 0-3% of $ZrO_2$; and/or 0-7% of $Na_2O$; and/or 0-5% of $Li_2O$; and/or 0-5% of $Ln_2O_3$; and/or 0-2% of $WO_3$; and/or 0-3% of $Ta_2O_5$; and/or 0-2% of $Bi_2O_3$; and/or 0-8% of RO; and/or 0-5% of ZnO; and/or 0-3% of $P_2O_5$; and/or 0-1% of a clarifying agent, wherein the $Ln_2O_3$ is one or more of $La_2O_3$, $Gd_2O_3$, $Y_2O_3$, and $Yb_2O_3$, the RO is one or more of BaO, SrO, CaO, and MgO, and the clarifying agent is one or more of $Sb_2O_3$, $SnO_2$ and $CeO_2$.

3. The optical glass according to claim 1, **characterized in that** the components of the optical glass in percentage by weight meet one or more of the following 9 conditions:

   1) $F/B_2O_3$ is 0.2-5.0;
   2) $Al_2O_3/F$ is less than 1.0;
   3) $K_2O/F$ is 0.7-7.0;
   4) $SiO_2/(K_2O+F)$ is 1.3-3.5;
   5) $(ZrO_2+Nb_2O_5+TiO_2)/F$ is 0.01-1.0;
   6) $(Nb_2O_5+TiO_2+Bi_2O_3+Ta_2O_5+WO_3)/B_2O_3$ is greater than 0 but less than or equal to 0.8;
   7) $(Nb_2O_5+TiO_2)/Al_2O_3$ is less than 2.0;
   8) $(Li_2O+Na_2O+K_2O)/B_2O_3$ is 0.7-6.0; and
   9) $(Li_2O+Na_2O+K_2O)/SiO_2$ is 0.15-0.8.

4. The optical glass according to claim 1, **characterized in that** the components of the optical glass in percentage by weight meet one or more of the following 9 conditions:

   1) $F/B_2O_3$ is 0.4-1.5;
   2) $Al_2O_3/F$ is 0.01-0.5;
   3) $K_2O/F$ is 1.5-3.0;
   4) $SiO_2/(K_2O+F)$ is 1.5-3.0;
   5) $(ZrO_2+Nb_2O_5+TiO_2)/F$ is 0.02-0.6;
   6) $(Nb_2O_5+TiO_2+Bi_2O_3+Ta_2O_5+WO_3)/B_2O_3$ is 0.01-0.3;
   7) $(Nb_2O_5+TiO_2)/Al_2O_3$ is 0.05-1.0;
   8) $(Li_2O+Na_2O+K_2O)/B_2O_3$ is 1.0-3.0; and
   9) $(Li_2O+Na_2O+K_2O)/SiO_2$ is 0.2-0.6.

5. The optical glass according to claim 1, **characterized in that** the components of the optical glass in percentage by weight meet one or more of the following 9 conditions:

   1) $F/B_2O_3$ is 0.5-0.9;
   2) $Al_2O_3/F$ is 0.07-0.3;
   3) $K_2O/F$ is 1.8-2.8;
   4) $SiO_2/(K_2O+F)$ is 1.7-2.5;
   5) $(ZrO_2+Nb_2O_5+TiO_2)/F$ is 0.03-0.4;
   6) $(Nb_2O_5+TiO_2+Bi_2O_3+Ta_2O_5+WO_3)/B_2O_3$ is 0.02-0.2;
   7) $(Nb_2O_5+TiO_2)/Al_2O_3$ is 0.1-0.5;
   8) $(Li_2O+Na_2O+K_2O)/B_2O_3$ is 1.5-2.0; and
   9) $(Li_2O+Na_2O+K_2O)/SiO_2$ is 0.2-0.45.

6. The optical glass according to claim 1, **characterized in that** the components of the optical glass are shown in percentage by weight, wherein $SiO_2$ is 52-68%; and/or $B_2O_3$ is 4-16%; and/or $K_2O$ is 12-27%; and/or $Nb_2O_5$ is 0-1%; and/or $TiO_2$ is 0-1%; and/or $ZrO_2$ is 0-2%; and/or F is 5-16%; and/or $Al_2O_3$ is 0.1-3%; and/or $Na_2O$ is 0-5%; and/or $Li_2O$ is 0-4%; and/or $Ln_2O_3$ is 0-3%; and/or $WO_3$ is 0-1%; and/or $Ta_2O_5$ is 0-2%; and/or $Bi_2O_3$ is 0-1%; and/or RO is 0-5%; and/or ZnO is 0-2%; and/or $P_2O_5$ is 0-2%; and/or a clarifying agent is 0-0.5%, wherein the $Ln_2O_3$ is one or more of $La_2O_3$, $Gd_2O_3$, $Y_2O_3$, and $Yb_2O_3$, the RO is one or more of BaO, SrO, CaO, and MgO, and the clarifying agent is one or more of $Sb_2O_3$, $SnO_2$ and $CeO_2$.

7. The optical glass according to claim 1, **characterized in that** the components of the optical glass are shown in percentage by weight, wherein $SiO_2$ is 54-64%; and/or $B_2O_3$ is 8-14%; and/or $K_2O$ is 13-25%; and/or $Nb_2O_5$ is 0-0.8%; and/or $TiO_2$ is 0-0.8%; and/or $ZrO_2$ is 0-1%; and/or F is 6-12%; and/or $Al_2O_3$ is 0.2-2%; and/or $Na_2O$ is 0-3%; and/or $Li_2O$ is 0-3%; and/or $Ln_2O_3$ is 0-1%; and/or $WO_3$ is 0-0.5%; and/or $Ta_2O_5$ is 0-1%; and/or $Bi_2O_3$ is 0-0.5%; and/or RO is 0-2%; and/or ZnO is less than 1%; and/or $P_2O_5$ is 0-1%; and/or a clarifying agent is 0-0.2%, wherein the $Ln_2O_3$ is one or more of $La_2O_3$, $Gd_2O_3$, $Y_2O_3$, and $Yb_2O_3$, the RO is one or more of BaO, SrO, CaO, and MgO, and the clarifying agent is one or more of $Sb_2O_3$, $SnO_2$ and $CeO_2$.

8. The optical glass according to claim 1, **characterized in that** the optical glass has a refractive index $n_d$ of 1.45-1.51; and/or the optical glass has an Abbe number $v_d$ of 66-74; and/or the optical glass has a transmittance at 365 nm $\tau_{365nm}$ more than 98.0%; and/or the optical glass has a transmittance at 365 nm resistance to ultraviolet radiation attenuation performance $\Delta\tau_{365nm}$ less than 1.0%; and/or the optical glass has a transmittance at 405 nm resistance to ultraviolet radiation attenuation performance $\Delta\tau_{405nm}$ less than 0.5%; and/or the optical glass has a bubble degree above grade A; and/or the optical glass has a stripe degree above grade C; and/or the optical glass has a weather resistance CR above class 2; and/or the optical glass has a transition temperature $T_g$ less than 490°C; and/or the optical glass has abrasiveness $F_A$ of 60-90; and/or the optical glass has a density $\rho$ less than 2.70 g/cm$^3$; and/or the optical glass has refractive index batch stability of $-15\times10^{-5}$-$+15\times10^{-5}$.

9. The optical glass according to claim 1, **characterized in that** the optical glass has a refractive index $n_d$ of 1.47-1.49; and/or the optical glass has an Abbe number $v_d$ of 69-71; and/or the optical glass has a transmittance at 365 nm $\tau_{365nm}$ more than 99.5%; and/or the optical glass has a transmittance at 365 nm resistance to ultraviolet radiation attenuation performance $\Delta\tau_{365nm}$ less than 0.8%; and/or the optical glass has a transmittance at 405 nm resistance to ultraviolet radiation attenuation performance $\Delta\tau_{405nm}$ less than 0.2%; and/or the optical glass has a bubble degree of grade $A_{00}$; and/or the optical glass has a stripe degree above grade B; and/or the optical glass has a weather resistance CR of class 1; and/or the optical glass has a transition temperature $T_g$ less than 475°C; and/or the optical glass has abrasiveness $F_A$ of 70-80; and/or the optical glass has a density $\rho$ less than 2.50 g/cm$^3$; and/or the optical glass has refractive index batch stability of $-5\times10^{-5}$-$+5\times10^{-5}$.

10. An optical element, **characterized in that** the optical element is made of the optical glass according to claim 1.

Europäisches
Patentamt

European
Patent Office

Office européen
des brevets

## EUROPEAN SEARCH REPORT

**Application Number**

EP 24 20 2270

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 116 143 A (CDGM OPTICAL GLASS CO LTD) 16 November 2016 (2016-11-16) * the whole document * | 1-10 | INV. C03C3/118 |
| X | CN 101 296 872 A (OHARA KK [JP]) 29 October 2008 (2008-10-29) * the whole document * | 1-10 | |
| X | US 2021/373426 A1 (JEDAMZIK RALF [DE] ET AL) 2 December 2021 (2021-12-02) * example 5 * | 1-10 | |
| X | US 2007/265155 A1 (CORNELIUS LAUREN K [US] ET AL) 15 November 2007 (2007-11-15) * table 1 * | 1-10 | |
| X | US 2017/321056 A1 (MATANO TAKAHIRO [JP] ET AL) 9 November 2017 (2017-11-09) * paragraph [0092] * | 1-9 | |

| TECHNICAL FIELDS SEARCHED (IPC) |
|---|
| C03C |

The present search report has been drawn up for all claims

| Place of search | Date of completion of the search | Examiner |
|---|---|---|
| Munich | 7 February 2025 | King, Ruth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 2270

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2025

| Patent document cited in search report | | Publication date | Patent family member(s) | | Publication date |
|---|---|---|---|---|---|
| CN 106116143 | A | 16-11-2016 | NONE | | |
| CN 101296872 | A | 29-10-2008 | CN | 101296872 A | 29-10-2008 |
| | | | JP | 2007126296 A | 24-05-2007 |
| US 2021373426 | A1 | 02-12-2021 | BE | 1028287 A1 | 06-12-2021 |
| | | | CA | 3119826 A1 | 28-11-2021 |
| | | | CN | 113740937 A | 03-12-2021 |
| | | | DE | 102020114365 A1 | 02-12-2021 |
| | | | JP | 2021189453 A | 13-12-2021 |
| | | | TW | 202208941 A | 01-03-2022 |
| | | | US | 2021373426 A1 | 02-12-2021 |
| US 2007265155 | A1 | 15-11-2007 | NONE | | |
| US 2017321056 | A1 | 09-11-2017 | CN | 107108768 A | 29-08-2017 |
| | | | JP | 6763303 B2 | 30-09-2020 |
| | | | JP | 6993623 B2 | 04-02-2022 |
| | | | JP | 2020094223 A | 18-06-2020 |
| | | | JP | 2020192810 A | 03-12-2020 |
| | | | JP | WO2016076180 A1 | 17-08-2017 |
| | | | US | 2017321056 A1 | 09-11-2017 |
| | | | WO | 2016076180 A1 | 19-05-2016 |

EPO FORM P0459

For more details about this annex : see Official Journal of the European Patent Office, No. 12/82

**EP 4 527 810 A1**

**Patent documents cited in the description**

- CN 101300202 A
- CN 108529874 A